# EUROPÄISCHE PATENTANMELDUNG

(11) **EP 4 826 546 A1**
(43) Veröffentlichungstag der Anmeldung: **21.10.2026**
(21) Anmeldenummer: 25171250.1
(22) Anmeldetag: 17.04.2025
(51) Int. Cl.: G06F 11/3668

(54) **COMPUTER-IMPLEMENTIERTES VERFAHREN ZUM EXPLORATIVEN TESTEN EINES ZU TESTENDEN TECHNISCHEN SYSTEMS**

(71) Anmelder: Siemens Aktiengesellschaft, 80333 München (DE)
(72) Erfinder: Rothbauer, Stefan, 86156 Augsburg (DE); Ulrich, Andreas, 81245 München (DE)
(74) Vertreter: Siemens Patent Attorneys

(57) **Zusammenfassung**

Die Erfindung betrifft ein computer-implementiertes Verfahren zum explorativen Testen eines zu testenden technischen Systems (20), umfassend die Schritte: a. Bereitstellen von einer Datenbasis durch eine Test-Einheit (10) (S1); wobei die Datenbasis ein Testmodell, ein initiales Explorationsmodell und mindestens eine Metrik umfasst; wobei das Testmodell eine Mehrzahl von Systemeingaben und entsprechenden Systemausgaben definiert; wobei jede Systemausgabe der Mehrzahl der entsprechenden Systemausgaben eine Reaktion auf eine Systemeingabe ist; wobei das initiale Explorationsmodell mindestens ein Systemverhalten repräsentiert; wobei die mindestens eine Metrik ein Abdeckungsmaß über das initiale Explorationsmodell definiert; b. Bestimmen mindestens einer ersten Systemeingabe aus der Mehrzahl der Systemeingaben des Testmodells durch die Test-Einheit (10) basierend auf dem Explorationsmodell und der mindestens einen Metrik anhand einer Teststrategie (S2); wobei sich die Teststrategie auf das mindestens eine Explorationsziel und auf die mindestens eine Metrik bezieht; wobei die Test-Einheit (10) über die mindestens eine erste Systemeingabe eine Stimulation des zu testenden technischen Systems (20) übernimmt; c. Ausführen der mindestens einen ersten Systemeingabe auf dem zu testenden technischen System (20) durch die Test-Einheit (10) (S3); d. Aktualisieren des initialen Explorationsmodells unter Berücksichtigung der mindestens einen ersten Systemeingabe und mindestens einer entsprechenden ersten Systemausgabe des zu testenden technischen Systems (20) durch die Test-Einheit (10) (S4); e. Aktualisieren der mindestens einen Metrik unter Berücksichtigung des aktualisierten Explorationsmodells durch die Test-Einheit (10) (S5); f. Bestimmen mindestens einer zweiten Systemeingabe aus der Mehrzahl der Systemeingaben des Testmodells durch die Test-Einheit (10) basierend auf dem aktualisierten Explorationsmodell und der aktualisierten mindestens einen Metrik anhand der Teststrategie (S6); g. Ausführen der mindestens einen zweiten Systemeingabe auf dem zu testenden technischen System (20) durch die Test-Einheit (10) (S7); h. Aktualisieren des aktualisierten Explorationsmodells unter Berücksichtigung der mindestens einen zweiten Systemeingabe und mindestens einer entsprechenden zweiten Systemausgabe des zu testenden technischen Systems (20) durch die Test-Einheit (10) (S8); i. Aktualisieren der aktualisierten mindestens einen Metrik unter Berücksichtigung des aktualisierten Explorationsmodells durch die Test-Einheit (10) (S9); j. Beenden der iterativen Durchführung durch die Test-Einheit (10), wenn das mindestens eine Explorationsziel erreicht ist (S10).

Ferner betrifft die Erfindung eine entsprechende Test-Einheit und entsprechendes Computerprogrammprodukt.

## Beschreibung

### 1. Technisches Gebiet

Die Erfindung betrifft ein computer-implementiertes Verfahren zum explorativen Testen eines zu testenden technischen Systems. Ferner ist die Erfindung auf eine entsprechende Test-Einheit und ein entsprechendes Computerprogrammprodukt gerichtet.

### 2. Stand der Technik

Softwaresysteme sind oft zustandsabhängig, wie zum Beispiel Softwaresteuerungen in cyber-physikalischen Systemen. Das bedeutet, dass die Software je nach Systemzustand unterschiedliche Aktionen ausführt. Der Systemzustand entsteht während des Betriebs durch eine Kombination von externen Ereignissen aus der Umgebung, wie empfangene Sensordaten, sowie internen Zuständen der Steuerungslogik selbst.

Darüber hinaus existieren, zumindest in einigen Bereichen, partielle Spezifikationen des technischen Systems und insbesondere der Steuerungssoftware. Diese partiellen Spezifikationen bieten Freiheitsgrade für die Gestaltung spezifischer Betriebsszenarien des technischen Systems und definieren das erwartete Systemverhalten auf einer abstrakten Ebene.

Für das Testen von Softwaresystemen und die Validierung ihres Systemverhaltens besteht die Herausforderung darin, ausreichend Testfälle bereitzustellen, die den Zustandsraum des technischen Systems oder Teilsystems möglichst vollständig abdecken. Jedoch ist dies in der Praxis selten realisierbar. Die Bereitstellung ausreichend getesteter Softwaresysteme stellt bis heute eine große Herausforderung dar, insbesondere eingebetteter Software im Kontext der cyber-physikalischen Systeme.

Es wurden verschiedene Ansätze gemäß dem Stand der Technik entwickelt, um die Herausforderungen zu überwinden. Ein Ansatz gemäß dem Stand der Technik beinhaltet die Testfallgenerierung basierend auf Code-Abdeckung, wie Anweisungs- oder Bedingungsabdeckung. Bei diesem Ansatz werden die Tests automatisch oder halbautomatisch basierend auf dem Kontrollfluss in der Software generiert. Die alleinige Betrachtung des Kontrollflusses steht jedoch nicht in Beziehung zu den Systemzuständen. Die wiederholte Ausführung des gleichen Codes in unterschiedlichen Zuständen kann zu unterschiedlichen Reaktionen des technischen Systems führen.

Ein anderer Ansatz gemäß dem Stand der Technik ist die Testfallgenerierung basierend auf Modellen, auch bekannt als Model-Based Testing (MBT). Nach der Erstellung eines Modells aus bestehenden Spezifikationen, das ein Gegenstück zum zu testenden System oder Teilsystem darstellt, werden die Tests systematisch nach entsprechenden Abdeckungskriterien abgeleitet, ähnlich den Kriterien für die Code-Abdeckung. Ein Vorteil dieses Ansatzes besteht darin, dass die Modelle Zustände gut repräsentieren können, zum Beispiel bei direkter Verwendung von Zustandsmaschinen. Dieser Ansatz liefert daher wirkungsvolle Tests. Der Ansatz erfordert jedoch vollständig spezifizierte Modelle, aus denen die Tests vor der Testausführung abgeleitet werden können.

Exploratives Testen ist eine Technik, bei der das zu testende technische System ad hoc erkundet wird. Die Testfälle werden während der Testausführung erstellt und sind nicht vordefiniert. Es ist ein zeitlich begrenztes Verfahren (time-boxed), das auf persönlichen Freiheiten des Testingenieurs basiert. Die Technik definiert kein Abdeckungsmaß. Die Tests können sich an Systemänderungen anpassen, da sie nicht vordefiniert sind. Sie sind jedoch schwer reproduzierbar, wenn die einzelnen Testschritte unvollständig protokolliert werden. Üblicherweise werden explorative Tests durch einen Testingenieur manuell durchgeführt. Der Nachteil liegt darin, dass der Ansatz fehleranfällig, zeitintensiv und ineffizient ist. Der Aufwand ist daher im Vergleich zu automatisierten Ansätzen hoch.

Die bekannten Ansätze haben jeweils ihre Stärken und Einschränkungen bei der Bewältigung der Komplexität des Testens von Softwaresystemen, insbesondere für zustandsabhängige technische Systeme, von denen nur partielle Spezifikationen vorliegen. Es besteht weiterhin Bedarf an verbesserten Verfahren, die solche technischen Systeme effizient erkunden und testen können, während sie Automatisierung, Anpassungsfähigkeit und Abdeckung in Einklang bringen.

Die vorliegende Erfindung stellt sich daher die Aufgabe ein computer-implementiertes Verfahren zum explorativen Testen eines zu testenden technischen Systems bereitzustellen, welches effizient und zuverlässig ist.

### 3. Zusammenfassung der Erfindung

Die oben genannte Aufgabe wird erfindungsgemäß durch ein computer-implementiertes Verfahren zum explorativen Testen eines zu testenden technischen Systems gelöst, umfassend die Schritte:
a. Bereitstellen von einer Datenbasis durch eine Test-Einheit; wobei
   die Datenbasis ein Testmodell, ein initiales Explorationsmodell und mindestens eine Metrik umfasst; wobei
   das Testmodell eine Mehrzahl von Systemeingaben und entsprechenden Systemausgaben definiert; wobei
   jede Systemausgabe der Mehrzahl der entsprechenden Systemausgaben eine Reaktion auf eine Systemeingabe ist; wobei
   das initiale Explorationsmodell mindestens ein Systemverhalten repräsentiert; wobei die mindestens eine Metrik ein Abdeckungsmaß über das initiale Explorationsmodell definiert;
b. Bestimmen mindestens einer ersten Systemeingabe aus der Mehrzahl der Systemeingaben des Testmodells durch die Test-Einheit basierend auf dem Explorationsmodell und der mindestens einen Metrik anhand einer Teststrategie; wobei
   sich die Teststrategie auf das mindestens eine Explorationsziel und auf die mindestens eine Metrik bezieht; wobei
   die Test-Einheit über die mindestens eine erste Systemeingabe eine Stimulation des zu testenden technischen Systems übernimmt;
c. Ausführen der mindestens einen ersten Systemeingabe auf dem zu testenden technischen System durch die Test-Einheit;
d. Aktualisieren des initialen Explorationsmodells unter Berücksichtigung der mindestens einen ersten Systemeingabe und mindestens einer entsprechenden ersten Systemausgabe des zu testenden technischen Systems durch die Test-Einheit;
e. Aktualisieren der mindestens einen Metrik unter Berücksichtigung des aktualisierten Explorationsmodells durch die Test-Einheit;
f. Bestimmen mindestens einer zweiten Systemeingabe aus der Mehrzahl der Systemeingaben des Testmodells durch die Test-Einheit basierend auf dem aktualisierten Explorationsmodell und der aktualisierten mindestens einen Metrik anhand der Teststrategie;
g. Ausführen der mindestens einen zweiten Systemeingabe auf dem zu testenden technischen System durch die Test-Einheit;
h. Aktualisieren des aktualisierten Explorationsmodells unter Berücksichtigung der mindestens einen zweiten Systemeingabe und mindestens einer entsprechenden zweiten Systemausgabe des zu testenden technischen Systems durch die Test-Einheit;
i. Aktualisieren der aktualisierten mindestens einen Metrik unter Berücksichtigung des aktualisierten Explorationsmodells durch die Test-Einheit;
j. Beenden der iterativen Durchführung durch die Test-Einheit, wenn das mindestens eine Explorationsziel erreicht ist.

Dementsprechend bezieht sich die Erfindung auf ein computer-implementiertes Verfahren zum explorativen Testen eines zu testenden technischen Systems (engl. system under test, SUT). Mit anderen Worten erfolgt das explorative Testen des zu testenden technischen Systems automatisch durch die Test-Einheit. Das zu testende technische System kann ein beliebiges technisches System sein und ist bevorzugt als Softwaresystem ausgebildet. Das Softwaresystem kann eine oder mehrere Softwarekomponenten umfassen. Die Test-Einheit kann als beliebige Recheneinheit ausgebildet sein, wie Datenverarbeitungsvorrichtung.

Das zu testende technische System kann bereitgestellt werden und kann durch Systemeingaben stimuliert werden. Ferner können auch die entsprechenden Reaktionen des zu testenden technischen Systems auf die Systemeingaben beobachtet werden. Die Reaktionen sind die Systemausgaben. Die Systemausgaben können auch als Systemantworten verstanden werden. Das Verhalten des zu testenden technischen Systems ist bevorzugt anfangs nicht bekannt und kann während des Testens exploriert und mit den spezifizierten Erwartungen aus dem Testmodell validiert werden. Das zu testende technische System kann eine Simulation des technischen Systems oder ein ausführbares Systemmodell sein, wenn die für die Tests wichtigen Systemreaktionen durch die Simulation oder das ausführbare Systemmodell ausreichend simuliert werden bzw. modelliert sind.

Weiterhin ist das zu testende technische System bevorzugt rücksetzbar. Das bedeutet, dass der Initialzustand des technischen Systems bekannt und jederzeit wieder erreichbar ist. Abhängig von der Kontrollierbarkeit des zu testenden technischen Systems können weitere erreichbare Zustände als Ausgangszustände für die Testausführung möglich sein.

Beim explorativen Testen gibt es üblicherweise keine vorgefertigten Testfälle. Die Teststrategie ist bevorzugt adaptiv. Das bedeutet das Verhalten der Test-Einheit ist während der Durchführung nicht vorbestimmt. Die Test-Einheit wählt ihre Systemeingabe basierend auf dem aktuellen Wissen aus der Datenbasis anhand der Teststrategie aus. Das Explorationsziel kann durch die Metrik vorgegeben sein.

Im ersten Verfahrensschritt werden die Eingabedaten in Form der Datenbasis bereitgestellt. Die Datenbasis kann als Wissensbasis (engl. Knowledge Base) verstanden werden und dient der Teststrategie zur Bestimmung der Eingabe für die weiteren Verfahrensschritte. Die Datenbasis umfasst das Testmodell, das initiale Explorationsmodell und die Metrik.

Das Testmodell umfasst die Systemeingaben und erwarteten Systemausgaben. Die möglichen Systemeingaben des zu testenden technischen Systems sind in den Zuständen des Testmodells festgelegt. Weiterhin können zusätzlich auch ihre Parameter und/oder ihre Bedingungen (engl. constraints), unter denen die Systemeingaben ausgeführt werden, im Testmodell festgelegt werden. Weiterhin können auch die Bedingungen (engl. Asserts) über die Systemausgaben unter Berücksichtigung der gewählten Systemeingabe und des jeweiligen Zustands im Testmodell festgelegt werden. Das Testmodell wird bevorzugt nur partiell definiert, mehr bevorzugt je nach Detailierungsgrad und/oder verfügbarer Erfordernisse.

Mit anderen Worten kann das Testmodell in einigen Implementierungen unter Verwendung formaler Modellierungssprachen oder domänenspezifischer Sprachen dargestellt werden. Es kann beispielsweise mit Zustandsmaschinen beschrieben werden, wobei Zustände verschiedene Systembedingungen repräsentieren und Übergänge Eingaben darstellen, die das System zwischen Zuständen bewegen. Das Testmodell muss nicht unbedingt vollständig oder vollständig spezifiziert sein. In einigen Fällen kann es teilweise bzw. partielle Informationen über das System enthalten, die das zum Zeitpunkt des Tests verfügbare Wissen widerspiegeln. Diese teilweise Spezifikation ermöglicht eine Flexibilität bei der Erforschung von Systemverhaltensweisen, die möglicherweise nicht vollständig verstanden oder dokumentiert sind.

Das Testmodell kann auch Informationen über die relative Wichtigkeit oder Priorität verschiedener Systemeingaben oder Systemverhaltensweisen enthalten. Diese Informationen können von der Test-Einheit verwendet werden, um sich auf Bereiche des technischen Systems zu konzentrieren, die als kritischer oder fehleranfälliger gelten.

Folglich beschreibt das Testmodell eine Soll-Spezifikation: erlaubte Systemeingaben im jeweiligen Zustand, erwartete Systemausgaben nach Eingabe im jeweiligen Zustand.

Das initiale Explorationsmodell wird aus den getätigten Systemeingaben und beobachteten Systemausgaben aufgebaut. Das initiale Explorationsmodell kann zur Laufzeit des Tests oder post-mortem unter Verwendung von Logs und/oder Ausführungsprotokollen aufgebaut werden. Die Ausführungsprotokolle ermöglichen die Verwendung von Felddaten. Mit anderen Worten kann es sich beim Explorationsmodell um ein Zustandsmodell handeln. Beim Zustandsmodell wird ein neuer Zustand jeweils nach einer Systemeingabe eingenommen. Der Anfangszustand ist dabei bekannt. Das Explorationsmodell wird während der Exploration erweitert und gemäß neuer Beobachtungen aktualisiert.

Das initiale Explorationsmodell ist das Explorationsmodell, das am Anfang des Verfahrens zur Verfügung steht. Wenn das Verfahren zuvor noch nicht ausgeführt wurde, ist es meistens leer. Das heißt, es besteht nur aus dem initialen Zustand. Wenn das Verfahren wiederholt zur Anwendung kommt, beschreibt das initiale Explorationsmodell das Explorationsmodell aus der letzten Durchführung, z.B. aus Regressionstests. Diese Weiterverwendung eines zuvor erstellten Explorationsmodells erlaubt seine inkrementelle Erweiterung um neue Zustände mit den zugehörigen Systemeingaben und Systemausgaben. Dadurch kann das Verfahren sich näher an dem in der Teststrategie gewählten Explorationsziel annähern.

Folglich beschreibt das Explorationsmodell eine Ist-Spezifikation: beobachtete Systemeingaben und Systemausgaben sowie beobachtete Zustände.

Die Metrik beschreibt ein Abdeckungsmaß über dem Explorationsmodell, das als Entscheidungsbasis in der Teststrategie für die weitere Exploration und der Testendbestimmung dient. Mit anderen Worten kann die Metrik zur Definition des Explorationsziels verwendet werden.

Die Teststrategie kann auch als Eingabe bereitgestellt werden. Die Teststrategie versucht dabei das mindestens eine Explorationsziel zu erreichen. Die Teststrategie kann sowohl das

Testmodell als auch das in einem Ausführungsschritt aktualisierte Explorationsmodell berücksichtigen.

Die Datenbasis kann über eine oder mehrere Eingabeschnittstellen der Test-Einheit empfangen werden. Die Eingabeschnittstellen stellen vorteilhafterweise eine effiziente und reibungslose Datenübertragung zwischen Recheneinheiten sicher. Daten können bidirektional ausgetauscht werden ohne Datenstau.

In einer ersten Iteration oder einem erstem Durchlauf wird die erste Systemeingabe aus der Mehrzahl der Systemeingaben aus dem Testmodell ermittelt. Die Bestimmung oder Ermittlung der ersten Systemeingabe erfolgt dabei durch die Test-Einheit und mit Hilfe der Teststrategie. Die Teststrategie kann beispielsweise festlegen, dass jede Systemeingabe mindestens einmal bestimmt und auf dem zu testenden technischen System ausgeführt wird. Nach der Bestimmung der ersten Systemeingabe wird diese auch auf dem zu testenden technischen System ausgeführt und die entsprechende Systemausgabe beobachtet. Die Ausführung erfolgt durch die Test-Einheit. Nach der Ausführung der ersten Systemeingabe wird das initiale Explorationsmodell aktualisiert. Bei der Aktualisierung wird sowohl die erste Systemeingabe als auch die entsprechende beobachtete Systemausgabe als Reaktion des zu testenden technischen Systems betrachtet. Die Aktualisierung erfolgt durch die Test-Einheit. Weiterhin wird auch die Metrik aktualisiert.

Die erste Iteration resultiert in dem aktualisierten Explorationsmodell als Zwischenschritt. Das aktualisierte Explorationsmodell wird mit jeder weiteren Iteration auch weiter aktualisiert und angepasst. Die zweite und somit jede weitere oder nächste Aktualisierung erfolgt allerdings unter Berücksichtigung der zweiten (oder weiteren) Systemeingabe sowie der entsprechenden Systemausgabe. Folglich wird die erste Systemeingabe oder die vorherigen Eingaben nicht mehr berücksichtigt.

Mit anderen Worten wächst und verfeinert sich das Explorationsmodell. Zu Beginn kann das Explorationsmodell beispielsweise nur aus dem bekannten Anfangszustand des technischen Systems bestehen. Mit jedem Zyklus können neue Zustände, Übergänge und/oder Verhaltensweisen basierend auf den beobachteten Reaktionen des zu testenden technischen Systems auf verschiedene Systemeingaben hinzugefügt werden.

Der Aufbau des Explorationsmodells kann typischerweise die Erstellung von Knoten, die Systemzustände repräsentieren, und Kanten, die Übergänge zwischen Zuständen darstellen, die durch spezifische Systemeingaben ausgelöst werden. Wenn beispielsweise eine Systemeingabe A auf das technische System im Zustand S1 angewendet wird und zu einem Übergang in den Zustand S2 führt, würde dies im Explorationsmodell als zwei Knoten (S1 und S2) dargestellt werden, die durch eine mit der Systemeingabe A beschriftete Kante verbunden sind.

Das Explorationsmodell kann auf mehrere Arten aktualisiert werden:
1. Hinzufügen mindestens eines Zustands: Wenn ein zuvor nicht beobachteter Systemzustand auftritt, wird dem Explorationsmodell ein neuer Knoten hinzugefügt.
2. Hinzufügen mindestens eines Übergangs: Wenn ein neues Eingabe-Ausgabe-Paar für einen bestimmten Zustand beobachtet wird, wird dem Explorationsmodell eine neue Kante hinzugefügt.
3. Verfeinern mindestens eines bestehenden Zustands: Wenn mehr Informationen über einen bestimmten Zustand gesammelt werden, kann seine Darstellung im Explorationsmodell mit zusätzlichen Details oder Attributen aktualisiert werden.
4. Zusammenführen kompatibler Zustände: In einigen Fällen können Zustände, die zunächst als unterschiedlich angesehen wurden, basierend auf ihrem Verhalten als äquivalent identifiziert werden. Diese Zustände können im Explorationsmodell zusammengeführt werden, um eine präzisere Darstellung zu erstellen.

In einigen Implementierungen kann das Testmodell aktualisiert oder verfeinert werden, wenn neue Informationen über das Systemverhalten entdeckt werden. Dieser dynamische Aspekt des Testmodells ermöglicht es der Test-Einheit, ihre Teststrategie basierend auf dem sich entwickelnden Verständnis des zu testenden technischen Systems anzupassen.

Die iterative Durchführung wird im letzten Verfahrensschritt durch die Test-Einheit beendet, sobald das Explorationsziel erfüllt ist. Das Explorationsziel kann dabei durch die Metrik vorgegeben sein. Das Explorationsziel ist beispielsweise erfüllt, sobald sich das Explorationsmodell nicht mehr ändert oder mit anderen Worten konstant bleibt bzw. unverändert bleibt nach einer weiteren Aktualisierung. Das Explorationsziel kann auch eine bestimmte Anzahl von Iterationen, einen bestimmten Zeitraum, eine Größe des Explorationsmodells, mindestens ein Kriterium des Explorationsmodells und/oder einen Rechenaufwand festlegen.

Bei der Größe ist das Explorationsziel beispielsweise erfüllt, sobald die vordefinierte Größe erreicht wird und/oder überschritten wird. Das Explorationsziel ist beispielsweise auch erfüllt, wenn die zur Verfügung gestellten Ressourcen, insbesondere die Ausführungszeit, aufgebraucht wurden.

Das computer-implementierte Verfahren kann in einem bestimmten zeitlichen Rahmen durchgeführt werden. Zusätzlich oder alternativ kann das computer-implementierte Verfahren ereignisbasiert und/oder abhängig von bestimmten Kriterien durchgeführt werden.

Sofern nicht anders angegeben, können alle Schritte des computerimplementierten Verfahrens durch die Test-Einheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Die vorliegende Erfindung ermöglicht es den systematischen Ansatz des model-basierten Testens mit dem Ansatz des adaptiven, explorativen Testens in Einklang zu bringen. Im Gegensatz zum bekannten Ansatz, Model-Based Testing (MBT), gemäß dem Stand der Technik ist kein vollständiges Modell zur Testableitung erforderlich, sondern der nächste Testschritt wird zur Laufzeit nach vorgegebenen Kriterien bestimmt. Die Bewertung der Systemausgaben erfolgt auf Basis der bestehenden (partiellen) Spezifikation.

Weitere Vorteile der vorliegenden Erfindung sind:
- Das computer-implementierte Verfahren ermöglicht es technische Systeme zu testen, bei denen die Spezifikation nur unvollständig und partiell vorliegt.
- Die Kenntnis über das Systemverhalten zur Laufzeit wird explizit in einem Explorationsmodell, das das wahre, beobachtete Ablaufverhalten des technischen Systems beschreibt, festgehalten.
- Das Testen und die Exploration finden gemeinsam in einem Schritt statt. Bereits während der Exploration werden Systemreaktionen gemäß des vorhandenen Systemwissens geprüft.
- Die Exploration des Systemverhaltens erfolgt auf effiziente und zuverlässige Art und Weise im Gegensatz zum bekannten explorativen Test, der in der Regel manuell (human-in-the-loop) erfolgt. Dadurch wird der Aufwand wesentlich verringert und die Fehleranfälligkeit reduziert. Es werden deutlich mehr Tests ermöglicht.
- Der Aufwand für die Erstellung des Explorationsmodells kann gesteuert werden, indem geeignete Teststrategien für die Auswahl der zu explorierenden Zustände, der Auswahl von Aktionen, der Parameter und/oder des Testendekriteriums festgelegt werden.
- Es wird ein objektiv nachvollziehbares Kriterium für die Vollständigkeit der Exploration spezifiziert in Form des Explorationsziels, so dass eine objektive Basis für die Erreichung der Testabdeckung vorliegt.

In einer Ausgestaltung ist das Testmodell, das Explorationsmodell und/oder die mindestens eine Metrik der Datenbasis in einer flüchtigen oder nicht-flüchtigen Speichereinheit gespeichert. Die Datenbasis oder Teile der Datenbasis werden in einer flüchten oder nicht-flüchtigen Speichereinheit gespeichert, bevorzugt Datenbank oder Cloud. Dementsprechend kann die Speichereinheit als eine Datenbank, eine Cloud oder sonstige flüchtige, nicht-flüchtige Speichereinheit ausgebildet sein. Die Speichereinheit ermöglicht eine zuverlässige und schnelle Datensicherung. Die Speichereinheit kann hinsichtlich ihrer Speicherkapazität sowie Skalierbarkeit etc. flexibel ausgewählt werden. Ein weiterer Vorteil liegt darin, dass auf die Daten effizient zugegriffen werden kann. Die Datenbasis, insbesondere das gewonnene Explorationsmodell, kann vorteilhafterweise für nachfolgende Testläufe, beispielsweise in einer Regressionstestphase, wiederverwendet und somit inkrementell erweitert werden.

In einer weiteren Ausgestaltung implementiert die Test-Einheit eine Monitor-Analyze-Plan-Execute over Knowledge (MAPE-K) Architektur. Die Test-Einheit ist als Gegenspieler zum zu testenden technischen System ausgebildet und übernimmt über die Systemeingaben die Stimulation des zu testenden technischen Systems. Weiterhin beobachtet die Test-Einheit die Systemausgaben des zu testenden technischen Systems. Die Test-Einheit kann das MAPE-K Modell des Autonomic Computing (Monitor, Analyze, Plan, Execute over a shared Knowledge Base) implementieren. Diese Architektur ermöglicht eine adaptive und systematische Erforschung des Verhaltens des zu testenden Systems.

In einer weiteren Ausgestaltung umfasst das Aktualisieren des Explorationsmodells weiterhin:
- Konsolidieren kompatibler Zustände; wobei das Konsolidieren umfasst
- Identifizieren von Zuständen, die identische Systemausgaben als Reaktion auf identische Systemeingaben produzieren, und
- Zusammenführen der identifizierten Zustände.

Dementsprechend werden kompatible Zustände im Explorationsmodell identifiziert. Zwei Zustände sind dabei kompatibel, wenn sie bei zwei identischen Systemeingaben identische Systemausgaben erzeugen und die nachfolgenden Zustände ebenfalls kompatibel sind. Durch das Identifizieren kompatibler Zustände kann die Anzahl der Zustände im Explorationsmodell drastisch reduziert werden, wenn kompatible Zustände auf einen einzigen Zustand abgebildet werden.

In einer weiteren Ausgestaltung umfasst die Teststrategie:
- Ausführen jeder Systemeingabe der Mehrzahl der Systemeingaben eine Mindestanzahl von Malen;
- Paarweises Testen;
- Ausführen aller ausführbaren Systemeingaben aus einem bekannten Systemzustand; oder
- Ausführen mindestens einer Systemeingabe gemäß einer anwendungsspezifischen Priorisierung.

In einer weiteren Ausgestaltung wird weist das Verfahren weiterhin auf
- Bereitstellen des aktualisierten Explorationsmodells; und/oder
- Generierung von mindestens einem Test auf Basis des aktualisierten Explorationsmodells. Dementsprechend kann das aktualisierte Explorationsmodell für die Generierung eines oder mehrere Tests mithilfe unterschiedlicher Testgenerierungsverfahren verwendet werden. Bei der Generierung kann das Testmodell aus der Datenbasis miteinbezogen werden. Der generierte Test ist bevorzugt ein Regressionstest. Die Generierung der Regressionstests dient der Sicherstellung der Beibehaltung des Systemverhaltens in nachfolgenden Entwicklungsschritten. Zusätzlich oder alternativ kann das aktualisierte Explorationsmodell ausgegeben, gespeichert und/oder verifiziert werden. Die Verifikation ermöglicht es festzustellen, ob im aktualisierten Explorationsmodell Sicherheitsgarantien oder andere Eigenschaften verletzt wurden bzw. welche Garantien und Eigenschaften bestehen.

Ferner betrifft die Erfindung eine Datenverarbeitungsvorrichtung zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt ein schematisches Ablaufdiagramm des erfindungsgemäßen Verfahrens.
- FIG 2: zeigt eine schematische Ansicht der Test-Einheit zum explorativen Testen gemäß einer Ausführungsform der Erfindung.

### 5. Beschreibung der bevorzugten Ausführungsformen

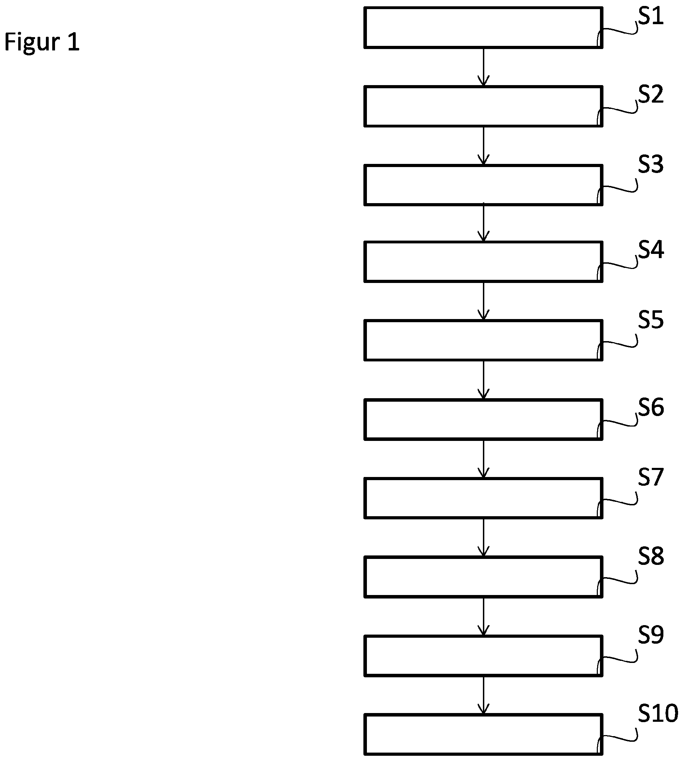

Im Folgenden werden bevorzugte Ausführungsformen der vorliegenden Erfindung in Bezug auf die Figur 1 beschrieben. Figur 1 zeigt das Ablaufdiagramm des computer-implementierten Verfahrens mit den Verfahrensschritten S1 bis S10.

Mit anderen Worten wird ein Testmodell, das die Erwartungen an das technische System enthalten kann, exploriert. Das Testmodell kann partiell beschrieben sein und/oder zur Laufzeit exploriert werden. Dabei wird das Wissen über das Systemverhalten gesammelt und in einem separaten Explorationsmodell angereichert. Dies kann auch zur Laufzeit erfolgen. Es können explizite Kriterien definiert werden, um den nächsten Testschritt zu bestimmen und festzulegen, wann durch die Exploration des technischen Systems eine ausreichende Abdeckung des Systemverhaltens erreicht wurde, um den Test zu beenden. Das gewonnene Wissen in Form des Explorationsmodells kann für zukünftige Tests, zum Beispiel bei wiederkehrenden Regressionstests verwendet werden.

Die Test-Einheit zum explorativen Testen eines zu testenden technischen Systems, kann gemäß einer Ausführungsform der Erfindung folgenden Untereinheiten umfassen:
a. eine Speichereinheit, die die Datenbasis speichert; wobei
   die Datenbasis das Testmodell, das initiale Explorationsmodell und die mindestens eine Metrik umfasst; wobei
   das Testmodell die Mehrzahl der Systemeingaben und entsprechenden Systemausgaben definiert; wobei
   jede Systemausgabe eine Reaktion auf eine Systemeingabe ist;
   das initiale Explorationsmodell das mindestens eine Systemverhalten repräsentiert;
   die mindestens eine Metrik das Abdeckungsmaß über das initiale Explorationsmodell definiert;
b. eine Überwachungs-Untereinheit, welche zum Überwachen der mindestens einen ersten Systemeingabe, der mindestens einen zweiten Systemeingabe, der mindestens einen ersten Systemausgabe und der mindestens einen zweiten Systemausgabe eingerichtet ist;
c. eine Bestimmungs-Untereinheit, welche zum
   - Bestimmen der mindestens einen ersten Systemeingabe aus der Mehrzahl der Systemeingaben des Testmodells basierend auf dem initialen Explorationsmodell anhand der Teststrategie; und
   - Bestimmen der mindestens einen zweiten Systemeingabe aus der Mehrzahl der Systemeingaben des Testmodells basierend auf dem aktualisierten Explorationsmodell anhand der Teststrategie eingerichtet ist;
d. eine Ausführungs-Untereinheit, welche zum
   - Ausführen der mindestens einen ersten Systemeingabe auf dem zu testenden technischen System; und
   - Ausführen der mindestens einen zweiten Systemeingabe auf dem zu testenden technischen System eingerichtet ist; und
e. eine Aktualisierungs-Untereinheit, welche zum
   - Aktualisieren des initialen Explorationsmodells unter Berücksichtigung der mindestens einen ersten Systemeingabe und der mindestens einen entsprechenden ersten Systemausgabe des zu testenden technischen Systems; und
   - Aktualisieren des aktualisierten Explorationsmodells unter Berücksichtigung der mindestens einen zweiten Systemeingabe und der mindestens einen entsprechenden zweiten Systemausgabe des zu testenden technischen Systems eingerichtet ist. Weiterhin ist die Aktualisierungs-Untereinheit zum Aktualisieren der Metrik eingerichtet.

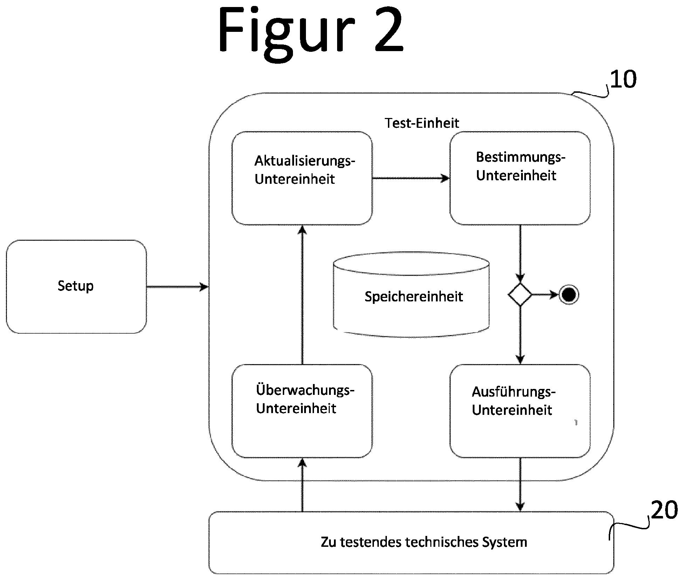

Figur 2 zeigt eine schematische Ansicht der Test-Einheit 10 zum explorativen Testen gemäß einer Ausführungsform der Erfindung. Die Test-Einheit 10 kann eine oder mehrere der folgenden Untereinheiten umfassen. Die Untereinheiten können auch als Komponenten oder Teilkomponenten der Test-Einheit 10 verstanden werden.

### Überwachungs-Untereinheit

Die Überwachungs-Untereinheit führt gemäß einer Ausführungsform der Erfindung eine Beobachtung oder Überwachung des zu testenden technischen Systems 20 durch. Die Überwachung kann kontinuierlich und/oder zur Laufzeit erfolgen. Weiterhin kann die Systemumgebung über Sensoren, Schnittstellen des technischen Systems und/oder zusätzliche Test-Schnittstellen erfolgen. Die Beobachtungen können als Basis für die Bestimmung des aktuellen System-Zustands, die Entwicklung eines Verständnisses dafür und/oder zur Ermittlung der Korrektheit des Systemverhaltens gemäß der Vorgaben aus dem Testmodell dienen. Weiterhin kann die Überwachung zusätzlich oder alternativ post-mortem und/oder unter Verwendung von zuvor aufgezeichneten Traces oder Logs erfolgen.

### Aktualisierungs-Untereinheit

Die Aktualisierungs-Untereinheit analysiert gemäß einer Ausführungsform der Erfindung die beobachteten Reaktionen des zu testenden technischen Systems 20. Ferner kann die Aktualisierungs-Untereinheit auch Änderungen der Umgebung, die die Überwachungs-Untereinheit aufgezeichnet hat, analysieren. Die Analyse kann sich in mehrere Teilaufgaben gliedern:
a. Bewertung der beobachteten Systemausgaben des zu testenden technischen Systems 20 und/oder der Umgebungsänderungen anhand der Vorgaben aus dem Testmodell, die als Bedingungen über Variablen und Zustände, die im Test erfüllt sein müssen, beschrieben werden (sogenannte Assets). Mit anderen Worten kann die Aktualisierungs-Untereinheit jegliche Abweichungen von den Erwartungen aus dem Testmodell während der Testausführung ermitteln. Eine Abweichung kann durch eine verletzte Assert-Bedingung signalisiert werden.
   Dabei kann es die folgenden zwei Möglichkeiten geben, die im Rahmen der nachträglich stattfindenden Fehleranalyse aufgelöst werden können, wie beispielsweise durch eine Nutzer-Interaktion: Die Erwartung ist korrekt und die Abweichung resultiert aus einem Fehler in dem zu testenden technischen System (sog. True Positive im Test). Die Erwartung ist mindestens in dem Zustand, in dem die Abweichung auftrat, inkorrekt und muss durch eine Korrektur im Testmodell adressiert werden (sog. False Positive im Test).
b. Konstruktion des Explorationsmodells, bevorzugt in der Form eines Zustandsmodells aus den Beobachtungen, mehr bevorzugt aus den beobachteten Systemeingaben und Systemausgaben.
c. Aktualisierung der Metriken, die ein Maß zur erreichten Abdeckung im Explorationsmodell darstellen, wie die erreichte Abdeckung der Transitionen (Kanten) und der explorierten Zustände (Knoten im Modell, wenn interpretiert als gerichteter Graph) und/oder möglicher Systemeingaben in den jeweiligen Zuständen.
d. Identifizierung und/oder Zusammenfassen von kompatiblen Zuständen im Explorationsmodell mit dem Ziel, ein Explorationsmodell mit weniger Zuständen zu erschaffen, als zur Repräsentation der Beobachtungen ursprünglich erforderlich waren (Model Learning).

Die Bewertung, Konstruktion und/oder Aktualisierung findet kann zur Laufzeit des Tests stattfinden. Die Identifizierung und/oder das Zusammenfassen kann auch post-mortem stattfinden, da diese Teilaufgabe rechenintensiv ist. Der Nachteil einer post-mortem Lösung ist, dass bestimmte Metriken, die über Zustände definiert sind, für die Durchführung der Teststrategie nicht aktuell zur Verfügung stehen. Der Nachteil ist darin zu sehen, dass dadurch Entscheidungen auf Basis veralteter Informationen getroffen werden können. Ein Kompromiss ist, die Identifizierung und/oder das Zusammenfassen verzögert bereitzustellen, wenn über ausreichend kurze Zeiträume das Wissen nicht unverhältnismäßig veraltet (outdated) ist, also weiterhin sinnvolle Entscheidungen getroffen werden können.

### Bestimmungs-Untereinheit

Die Bestimmungs-Untereinheit wählt aus dem Testmodell die nächste Systemeingabe der Test-Einheit an das zu testende technische System. Zusätzlich kann die Bestimmungs-Untereinheit auch mindestens einen erforderlichen Parameter auswählen, bevorzugt auch unter Beachtung der gewählten Teststrategie.

Die Bestimmungs-Untereinheit kann den Test wie folgt fortsetzen:
Die Bestimmungs-Untereinheit kann zunächst die Wahl aus den folgenden drei Optionen treffen:
a. Test aus dem aktuellen Zustand heraus fortsetzen;
b. Zurücksetzen des zu testenden technischen Systems und Fortsetzen des Tests aus dem Initialzustand; oder
c. Beenden des Tests.

Die Entscheidung, den Test im aktuellen Zustand fortzusetzen, kann durch die gewählte Teststrategie und/oder das Explorationsziel beeinflusst werden. Beispielhafte Explorationsziele sind
- Das Explorationsmodell ist unter der gegebenen Teststrategie vollständig exploriert.
- Das Explorationsmodell ist nicht vollständig, aber unter der gegebenen Teststrategie kann keine Verbesserung erreicht werden.
- Im aktuell erreichten Systemzustand gibt es keine ausführbare Systemeingabe (Deadlock).
- Die Ressourcen für die Exploration sind aufgebraucht, beispielsweise wurde die maximale Ausführungszeit überschritten.
- Die Analyse der Asserts zu den beobachteten Systemausgaben ergab eine Abweichung.
- Der vorgesehene Aufwand für die Exploration (z.B. zeitliches Limit) ist erschöpft.

Die Bestimmungs-Untereinheit kann die Eingabemenge wie folgt bestimmen:
Wird der Test fortgesetzt, kann im gewählten Zustand die Menge der in Betracht kommenden nächsten Systemeingaben aus dem Testmodell bestimmt werden. Beispielsweise können zu jeder einzelnen Eingabe Bedingungen (Constraints) im Testmodell definiert sein, die beschreiben, wann sie ausführbar ist. Sollen auch fehlerorientierte Tests durchgeführt werden, können auch bewusst Systemeingaben in die Eingabemenge aufgenommen werden, die gemäß der aktuellen Datenbasis im aktuellen Zustand nicht möglich sind.

Die Bestimmungs-Untereinheit kann die nächste Systemeingabe wie folgt wählen:
Ist die Eingabemenge bestimmt, kann die Auswahl der nächsten Systemeingabe aus dieser Eingabemenge entsprechend der Teststrategie erfolgen. Bevorzugt wird die Teststrategie zur Startzeit des Tests festgelegt. Beispielhafte Teststrategien sind
- Alle im Testmodell definierten Systemeingaben (ggf. pro kompatiblem Zustand) werden mindestens n-mal ausgeführt.
- Alle Zweifachkombinationen von Systemeingaben werden mindestens einmal ausgeführt.
- Ausgehend von einem bekannten Systemzustand, der bereits zuvor erreicht wurde, werden alle ausführbaren Systemeingaben einmal ausgeführt.
- In ausgewählten Zuständen werden spezifizierte nicht-definierte Systemeingaben ausgeführt.
- Gemäß einer anwendungsspezifischen Priorisierung und/oder Gewichtung möglicher Systemeingaben werden die Systemeingaben zufällig ausgewählt.
- Alle ausführbaren Systemeingaben bis zu einer Tiefe z (alle möglichen Eingabe-Traces der Länge z) werden ausgeführt.

Die Auswahl der nächsten Systemeingabe kann zusätzlich zur Teststrategie auch durch die Metriken beeinflusst werden. Die Auswahl der Systemeingabe kann derart gesteuert werden, dass bisher gering explorierte Zustände und/oder Verhaltensteile bevorzugt werden, und/oder dass priorisierte Teile des Explorationsmodells trotz bereits hoher Abdeckung weiter exploriert werden. Weiterhin kann die Auswahl der Systemeingabe zusätzlich oder alternativ zufallsgesteuert sein. Die Auswahl der Systemeingabe kann dabei gemäß einer Gewichtung erfolgen, um den Testaufwand der Anwendung auf relevante Systemteile zu verteilen, beispielsweise risikobasiert. Weiterhin kann die Auswahl der Systemeingabe zusätzlich oder alternativ auf dem bestärkenden Lernen basieren (engl. Reinforcement Learning Verfahren). Beim bestärkenden Lernen kann die Auswahl nachträglich über die tatsächlich erzielte Abdeckung (das setzt das Vorhandensein einer entsprechenden Metrik voraus) bewertet werden (Reward-Funktion). Die Bestimmungs-Untereinheit kann folglich die Auswahl der Systemeingabe verbessern, wenn der gleiche Zustand erneut erreicht wird.

Die Bestimmungs-Untereinheit kann die Eingabeparameter wie folgt bestimmen:
Häufig besitzen Systemeingaben auch Parameter, die für eine Ausführung befüllt werden müssen. Die dafür erforderlichen Werte (Daten) können durch die Teststrategie bereitgestellt oder generiert werden. Dabei kann der Definitionsbereich der Parameter vom Testmodell vorgegeben werden. Es können für die Auswahl konkreter Daten aus dem Definitionsbereich unterschiedliche Strategien Anwendung finden.

Eine Möglichkeit ist, die Parameter gleichverteilt aus einem festgelegten Definitionsbereich auszuwählen, wie gemäß einer applikationsspezifisch zu erwartenden Verteilung auszuwählen oder bekannte Testmethoden wie Grenzwerttests oder Vertreter von Äquivalenzklassen gemäß der im Testmodell hinterlegten Vertreter für die jeweiligen Äquivalenzklassen auszuwählen.

### Ausführungs-Untereinheit

Die Ausführungs-Untereinheit führt die bestimmte Systemeingabe aus, bevorzugt mit den bestimmten Parameterwerten. Weiterhin kann die Ausführungs-Untereinheit dabei die Abbildung der im Testmodell abstrakt formulierten Systemeingabe auf eine konkrete Interaktion mit dem zu testenden technischen System übernehmen, bevorzugt über technisch vorhandene Schnittstellen.

Die ausgeführte Systemausgabe kann in der Datenbasis und/oder der Speichereinheit protokolliert werden, um nachfolgende Systemreaktion und Stimulus einander zuordnen zu können.

### Setup

Im Setup kann die Datenbasis initial angelegt werden. Die Datenbasis umfasst das Testmodell, das die Ausführ-Bedingungen (Constraints), unter denen Systemeingaben an das zu testende technische System erfolgen können, und die Test-Bedingungen (Asserts), die die Systemausgaben bewerten, definiert. Weiterhin umfasst die Datenbasis das initiale Explorationsmodell, das anfangs nur durch seinen Anfangszustand definiert ist. Alternativ kann das initiale Explorationsmodell ein Explorationsmodell aus einem vorangegangenen Testlauf sein. Weiterhin umfasst die Datenbasis die für die Exploration benötigten Metriken.

Nach dem Setup führt die Test-Einheit gemäß einer Ausführungsform der Erfindung zyklisch die Schritte aus, bevorzugt gemäß des MAPE-K Modells:
Setup → (1) Bestimmungs-Untereinheit → (2) Ausführungs-Untereinheit → (3) Überwachungs-Untereinheit → (4) Aktualisierungs-Untereinheit → (1) → ... → (4) Ende.

Die Bestimmungs-Untereinheit kann auf Basis der Explorationsziele und dem aktuellen Stand der Exploration mithilfe der Metriken, über die Fortsetzung oder Beendigung der weiteren Exploration bestimmen. Soll die Exploration weitergeführt werden kann die Bestimmungs-Untereinheit vorgehen, wie bereits weiter oben ausgeführt.

Die Ausführung-Untereinheit kann die durch die Bestimmungs-Untereinheit bestimmte nächste Systemeingabe ausführen, derart, dass das zu testende technische System stimuliert wird. Weiterhin kann die Ausführungs-Untereinheit die Stimulation protokollieren und die Datenbasis somit ergänzt werden.

Die Überwachungs-Untereinheit kann kontinuierlich das technische System und/oder die Systemumgebung an den relevanten Schnittstellen beobachten. Weiterhin kann die Überwachungs-Untereinheit die Beobachtungen in der Datenbasis speichern, so dass sie für die anderen Untereinheiten zur Verfügung stehen.

Die Aktualisierungs-Untereinheit kann die Beobachtungen bewerten. Weiterhin kann die Aktualisierungs-Untereinheit eine Aktualisierung der Datenbasis durchführen. Die Aktualisierung kann die Aktualisierung des Explorationsmodells gemäß der Beobachtung umfassen. Die Aktualisierung kann eine Erweiterung sein. Weiterhin kann die Aktualisierung zusätzlich die Aktualisierung der Metriken und/oder die Konsolidierung des Explorationsmodells durch Reduktion auf kompatible Zustände umfassen.

Das computer-implementierte Verfahren und die zyklische Durchführung der Verfahrensschritte wird beendet, sobald das Explorationsziel erfüllt ist. Mit jedem Zyklus wird das Explorationsmodell detaillierter. Dieser Zyklus setzt sich fort, bis das Explorationsziel erreicht ist.

Das MAPE-K Modell gemäß dem Stand der Technik kann zur selbst-adaptiven Steuerung technischer Systeme in unbekannten Umgebungen eingesetzt werden. Hierbei kann die Anpassung und Verbesserung der Steuerung des technischen Systems im Fokus stehen, um das Systemverhalten bezogen auf gewünschte Ziele zu erreichen. Der Einsatz kann zur Betriebszeit des Systems (Operation) erfolgen.

Im Unterschied zum Stand der Technik wird die Test-Einheit bevorzugt bereits zur Entwicklungszeit (Development) eingesetzt. Im Sinne eines "Software-in-the-Loop"-Systems übernimmt die Test-Einheit durch die Auswahl der nächsten Systemeingaben die Steuerung über das zu testende technische System. Die Test-Einheit übernimmt dementsprechend die Rolle eines Widersachers (Adversary), um das zu testende technische System auch in Grenzbereiche der Spezifikation zu bewegen und zu testen. Das Lernen eines Explorationsmodells bietet darüber hinaus die Möglichkeit, das Systemverhalten systematisch zu erfassen und es so neben dem Testmodell als weitere Eingabe der Teststrategie zur Verfügung zu stellen.

## Patentansprüche

1. Computer-implementiertes Verfahren zum explorativen Testen eines zu testenden technischen Systems (20), umfassend die Schritte:
a. Bereitstellen von einer Datenbasis durch eine Test-Einheit (10) (S1); wobei
die Datenbasis ein Testmodell, ein initiales Explorationsmodell und mindestens eine Metrik umfasst; wobei
das Testmodell eine Mehrzahl von Systemeingaben und entsprechenden Systemausgaben definiert; wobei
jede Systemausgabe der Mehrzahl der entsprechenden Systemausgaben eine Reaktion auf eine Systemeingabe ist; wobei
das initiale Explorationsmodell mindestens ein Systemverhalten repräsentiert; wobei die mindestens eine Metrik ein Abdeckungsmaß über das initiale Explorationsmodell definiert;
b. Bestimmen mindestens einer ersten Systemeingabe aus der Mehrzahl der Systemeingaben des Testmodells durch die Test-Einheit (10) basierend auf dem Explorationsmodell und der mindestens einen Metrik anhand einer Teststrategie (S2); wobei
sich die Teststrategie auf das mindestens eine Explorationsziel und auf die mindestens eine Metrik bezieht; wobei
die Test-Einheit (10) über die mindestens eine erste Systemeingabe eine Stimulation des zu testenden technischen Systems (20) übernimmt;
c. Ausführen der mindestens einen ersten Systemeingabe auf dem zu testenden technischen System (20) durch die Test-Einheit (10) (S3);
d. Aktualisieren des initialen Explorationsmodells unter Berücksichtigung der mindestens einen ersten Systemeingabe und mindestens einer entsprechenden ersten Systemausgabe des zu testenden technischen Systems (20) durch die Test-Einheit (10) (S4);
e. Aktualisieren der mindestens einen Metrik unter Berücksichtigung des aktualisierten Explorationsmodells durch die Test-Einheit (10) (S5);
f. Bestimmen mindestens einer zweiten Systemeingabe aus der Mehrzahl der Systemeingaben des Testmodells durch die Test-Einheit (10) basierend auf dem aktualisierten Explorationsmodell und der aktualisierten mindestens einen Metrik anhand der Teststrategie (S6);
g. Ausführen der mindestens einen zweiten Systemeingabe auf dem zu testenden technischen System (20) durch die Test-Einheit (10) (S7);
h. Aktualisieren des aktualisierten Explorationsmodells unter Berücksichtigung der mindestens einen zweiten Systemeingabe und mindestens einer entsprechenden zweiten Systemausgabe des zu testenden technischen Systems (20) durch die Test-Einheit (10) (S8);
i. Aktualisieren der aktualisierten mindestens einen Metrik unter Berücksichtigung des aktualisierten Explorationsmodells durch die Test-Einheit (10) (S9);
j. Beenden der iterativen Durchführung durch die Test-Einheit (10), wenn das mindestens eine Explorationsziel erreicht ist (S10).

2. Computer-implementiertes Verfahren nach Anspruch 1, wobei das Testmodell, das initiale Explorationsmodell und/oder die mindestens eine Metrik der Datenbasis in einer flüchtigen oder nicht-flüchtigen Speichereinheit gespeichert ist.

3. Computer-implementiertes Verfahren nach Anspruch 1 oder Anspruch 2, wobei die Test-Einheit (10) eine Monitor-Analyze-Plan-Execute over Knowledge (MAPE-K) Architektur implementiert.

4. Computer-implementiertes Verfahren nach einem der vorhergehenden Ansprüche, wobei das Aktualisieren des Explorationsmodells weiterhin umfasst:
- Konsolidieren kompatibler Zustände; wobei das Konsolidieren umfasst
- Identifizieren von Zuständen, die identische Systemausgaben als Reaktion auf identische Systemeingaben produzieren, und
- Zusammenführen der identifizierten Zustände.

5. Computer-implementiertes Verfahren nach einem der vorhergehenden Ansprüche, wobei die Teststrategie umfasst:
- Ausführen jeder Systemeingabe der Mehrzahl der Systemeingaben eine Mindestanzahl von Malen;
- Paarweises Testen;
- Ausführen aller ausführbaren Systemeingaben aus einem bekannten Systemzustand; oder
- Ausführen mindestens einer Systemeingabe gemäß einer anwendungsspezifischen Priorisierung.

6. Computer-implementiertes Verfahren nach einem der vorhergehenden Ansprüche, weiterhin aufweisend
- Bereitstellen des aktualisierten Explorationsmodells; und/oder
- Generierung von mindestens einem Test auf Basis des aktualisierten Explorationsmodells.

7. Test-Einheit (10) zum Durchführen des computer-implementierten Verfahrens nach einem der vorhergehenden Ansprüche.

8. Computerprogrammprodukt mit einem Computerprogramm, das Mittel zur Durchführung des Verfahrens nach einem der Ansprüche 1 bis 6 aufweist, wenn das Computerprogramm auf einer programmgesteuerten Einrichtung zur Ausführung gebracht wird.
